# EUROPEAN PATENT SPECIFICATION

(11) **EP 3 284 572 B1**
(45) Date of publication and mention of the grant of the patent: **26.06.2019**
(21) Application number: 17179916.6
(22) Date of filing: 06.07.2017
(51) Int. Cl.: B29C 45/13, B29C 45/17, B29C 45/50

(54) **AN INJECTION MOLDING MACHINE AND A MELTED MATERIAL COMMUNICATING DEVICE THEREOF**
SPRITZGIESSMASCHINE UND SCHMELZGUTKOMMUNIKATIONSVORRICHTUNG DAFÜR
MACHINE DE MOULAGE PAR INJECTION ET DISPOSITIF DE COMMUNICATION EN MATÉRIAU FONDU

(30) Priority: 15.08.2016 CN 201610670762
(43) Date of publication of application: 21.02.2018
(73) Proprietor: Chen Hsong Asset Management Limited, New Territories, Hong Kong (HK)
(72) Inventor: CHIANG, Chi Kin, Industrial Estate, New Territories (HK); LIU, Li Xiong, Industrial Estate, New Territories (HK); TANG, You, Industrial Estate, New Territories (HK)
(74) Representative: Patentanwälte Bals & Vogel

(56) References cited:
- CN-B- 102 205 595
- CN-U- 201 530 088
- JP-A- H0 679 759
- US-A- 5 601 773

## Description

### Field of the Invention

The present invention relates to the technical field of an injection molding machine, and particularly, relates to an injection molding machine and a melted material communicating device thereof for the primary and secondary injection units.

### Background of the Invention

Most of the prior art injection molding machines with dual injection units are equipped with two injection units for different melted materials. The two injection units are arranged to be perpendicular with respect to each other. The melted materials enter the mold via two nozzles, respectively. This arrangement makes the design of mold complicated. Also, the injection amount from two injection units is relatively small and the footprint of the machine is large.

Therefore, there is an urgent need to invent an injection molding machine with the diameter of the screw remained unchanged and suitable for producing both super high weight injection molding products and light weight injection molding products.

### Brief Summary of the Invention

In order to overcome the problems associated with the prior art, the present invention provides an injection molding machine and a melted material communicating device thereof, which solves the interchanging problem between the injection of melted material from a single injection unit and the combination of injection from a plurality of injection units in the prior art injection molding machine.

To solve the above-mentioned technical problems, the present invention proposes a melted material communicating device of an injection molding machine used to connect or disconnect the flow passages in a second injection unit and a first injection unit. The melted material communicating device comprises an oil cylinder and a flow passage connecting block. The cylinder body of the oil cylinder is fixedly attached to the second injection unit and is spaced apart from the nozzle of the second injection unit by an interval. The piston rod of the said oil cylinder faces toward the nozzle of the second injection unit. The flow passage connecting block has a communicating cavity and is located within the interval between the said oil cylinder and the nozzle of the second injection unit. The said flow passage connecting block is capable of moving linearly within the interval. The said flow passage connecting block is rigidly attached to the nozzle of the said first injection unit, and the communicating cavity of the said flow passage connecting block is communicated with the nozzle of the first injection unit. When the piston rod of the said oil cylinder is ejected, the said flow passage connecting block can be driven to move in the direction of the nozzle of the said second injection unit, so as to abuttingly engage the said flow passage connecting block with the outer end of the nozzle of the second injection unit. Also, the communicating cavity of the said flow passage connecting block is communicated with the flow passage of the nozzle of the said second injection unit, such that the flow passage in the second injection unit is communicated with the flow passage of the first injection unit. When the piston rod of the said oil cylinder is retracted and reset, the flow passage connecting block is capable of disengaging from the outer end of the nozzle of the second injection unit, so as to disconnect the flow passage in the second injection unit from the flow passage in the first injection unit.

In a preferred embodiment, the said flow passage connecting block is provided with a sprue at an end thereof facing toward the nozzle of the said second injection unit, and the said sprue is contiguously engaged with the spherical surface of the nozzle of the said second injection unit.

In a preferred embodiment, the cylinder body of the said oil cylinder is fixedly attached to the second injection unit via a connecting rod.

In a preferred embodiment, the outer end of the said second injection unit is provided with a nozzle flange used to connect the nozzle of the said second injection unit, the said connecting rod is fixedly attached to the said second injection unit via the said nozzle flange.

In a preferred embodiment, the said flow passage connecting block is rigidly attached to the nozzle of the first injection unit via a connecting conduit, both ends of which are communicated with the communicating cavity of the said flow passage connecting block and the flow passage of the nozzle of the first injection unit, respectively.

In a preferred embodiment, the flow passage connecting block is provided therebelow with a support seat to support the said flow passage connecting block. The support seat is provided with a guiding rail, along which the said flow passage connecting block is capable of linearly moving within the interval between the said oil cylinder and the nozzle of the second injection unit.

The invention further provides an injection molding machine, which comprises a frame, an injection-shift holder provided on the frame, a plurality of injection units provided on the said injection-shift holder, and a melted material communicating device to connect or disconnect flow passages in any two injection units, wherein the melted material communicating device is the above-mentioned melted material communicating device.

In a preferred embodiment, there are two injection units, that is, a first injection unit and a second injection unit, respectively. The first injection unit is a primary injection unit and the second injection unit is a secondary injection unit.

The present invention has the following advantages over the prior art. The injection molding machine according to the present invention is provided with a melted material communicating device. The ejection of the piston rod of the oil cylinder makes the flow passage connecting block tightly sealed against the nozzle of the secondary injection unit, so as to communicate the melted material flow passage of the first injection unit (the primary injection unit) with the melted material flow passage of the second injection unit (the secondary injection unit), that is, the melted material in the barrel of the first injection unit (the primary injection unit) enters the mold via the flow passage of the nozzle thereof, and the melted material in the barrel of the second injection unit (the secondary injection unit) enters the mold after entering the intermediate flow passage in the connecting conduit and the flow passage in the nozzle of the first injection unit via the melted material communicating device, such that the dual injection units are utilized simultaneously to adapt for production with material discharging of large amount. Withdrawal of the piston rod of the oil cylinder separates the flow passage connecting block from the nozzle of the second injection unit (the nozzle of the secondary injection unit) automatically, such that only the first injection unit (the primary injection unit) is in operation to adapt for production with material discharging of small amount. The injection molding machine of the present invention satisfies the requirement of interchange between a large amount of material discharging and a small amount of material discharging.

### Brief Description of the Drawings

Fig. 1 is a partial structural illustration of the injection molding machine according to an embodiment of the present invention.
Fig. 2 is an enlarged structural view for the part A in Fig. 1.
Fig. 3 is a structural illustration of the melted material communicating device according to the embodiment of the present invention.

### List of the Reference Numbers:

2: an injection-shift holder
21: a first injection unit
211: a nozzle of the first injection unit
22: a second injection unit
221: a nozzle of the second injection unit
222: a nozzle flange
31: an oil cylinder
311: a piston rod
32: a flow passage connecting block
33: a connecting rod
34: a sprue
4: a connecting conduit
41: a check valve
5: a three-way connecting structure

### Detailed Description of the Invention

The typical embodiments that embody the features and advantages of the present invention will be described in detail in the following description. It is to be understood that the present invention can have various variations in different embodiments, all of which do not depart from the scope of the invention. The illustrations and descriptions herein are illustrative in essence, and therefore do not limit the invention.

Hereinafter the present invention will be further described in detail with reference to the embodiment and the accompanying figures.

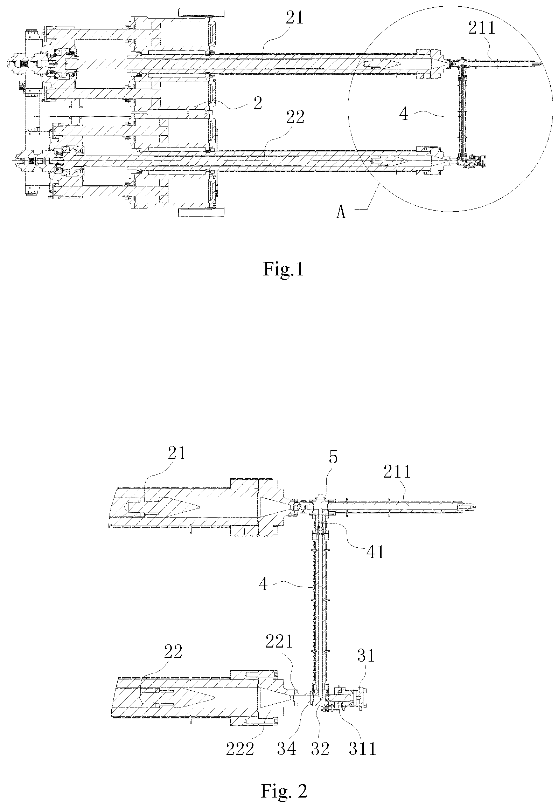

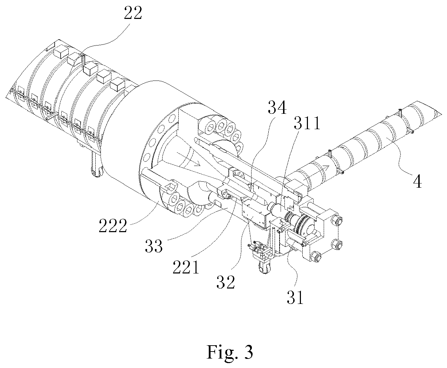

As shown in Figs. 1-3, the injection molding machine according to an embodiment of the present invention comprises a frame (not shown in the figures), an injection-shift holder 2 provided on the frame, two injection units provided on the injection-shift holder 2, and a melted material communicating device used to connect or disconnect the two flow passages of the injection units, which guarantees the safety of the connecting conduit when only the first injection unit is in operation.

The two injection units in the present embodiment are a first injection unit 21 and a second injection unit 22. The first injection unit 21 is the primary injection unit, and the second injection unit 22 is the secondary injection unit. The first injection unit 21 and the second injection unit 22 are parallelly disposed on the injection-shift holder 2. A connecting conduit 4 is disposed between an outer end of the second injection unit 22 and a nozzle 211 of the first injection unit 21. The outer end of the second injection unit 22 is disposed with a melted material communicating device, which is connected to the connecting conduit 4.

In practice, there may be more than two injection units. The number of the injection units is not limited.

The melted material communicating device of the injection molding machine comprises an oil cylinder 31 and a flow passage connecting block 32.

The cylinder body of the oil cylinder 31 is fixedly attached to the second injection unit 22, and is spaced apart from the nozzle 221 of the second injection unit by an interval. The piston rod 311 of the oil cylinder 31 faces toward the nozzle 221 of the second injection unit.

The flow passage connecting block 32 is provided with a communicating cavity. The flow passage connecting block 32 is disposed within the spacing or interval between the oil cylinder 31 and the nozzle 221 of the second injection unit, and the flow passage connecting block 32 can conduct linear movement within the spacing or interval. The linear movement, as mentioned herein, refers to moving along the straight line connecting the two locations of the nozzle 221 of the second injection unit and the oil cylinder 31. The flow passage connecting block 32 is rigidly attached to the nozzle 211 of the first injection unit, and the communicating cavity of the flow passage connecting block 32 is communicated with the flow passage of the nozzle 211 of the first injection unit.

When the piston rod 311 of the oil cylinder 31 is ejected, the flow passage connecting block 32 can be driven to move in the direction of the nozzle 221 of the second injection unit, such that the flow passage connecting block 32 abuttingly engages the outer end of the nozzle 221 of the second injection unit, and the communicating cavity of the flow passage connecting block 32 is communicated with the flow passage of the nozzle 221 of the second injection unit, in this way the flow passage in the second injection unit 22 is communicated with the flow passage of the first injection unit 21.

When the piston rod 311 of the oil cylinder 31 is retracted and reset, the flow passage connecting block 32 can disengage from the outer end of the nozzle 221 of the second injection unit automatically, such that the flow passages of the second injection unit 22 and the first injection unit 21 are disconnected. In such a way, the connecting conduit 4 is free of damage when only the first injection unit 21 is in operation.

Furthermore, the cylinder body of the oil cylinder 31 is fixedly attached to the second injection unit 22 via a connecting rod 33. Particularly, the outer end of the second injection unit 22 is provided with a nozzle flange 222 for attaching to the nozzle 221 of the second injection unit 22. The connecting rod 33 is fixedly attached with the second injection unit 22 via the nozzle flange 222. That is, the connecting rod 33 is fixedly attached to the nozzle flange 222 at one end thereof, and is fixedly attached to the cylinder body of the oil cylinder 31 at the other end thereof.

The flow passage connecting block 32 is rigidly attached to the nozzle 211 of the first injection unit via the connecting conduit 4. The communicating cavity of the flow passage connecting block 32 and the flow passage of the nozzle 211 of the first injection unit are communicated with the connecting conduit 4. The interior of the connecting conduit 4 constitutes an intermediate flow passage between the first injection unit 21 and the second injection unit 22.

Preferably, the end of the flow passage connecting block 32 that faces to the nozzle 221 of the second injection unit is provided with a sprue 34, which is contiguously engaged with the spherical surface of the nozzle 221 of the second injection unit to provide a better sealing.

The flow passage connecting block 32 is provided therebelow with a support seat (shown in figures) to support the flow passage connecting block 32. The support seat is provided with a guiding rail thereon. The flow passage connecting block 32 is provided with rollers, which can cooperate with the guiding rail so as to enable the flow passage connecting block 32 to linearly move along the guiding rail within the interval between the oil cylinder 31 and the nozzle 221 of the second injection unit.

Referring to Fig. 2, the attachment location of the connecting conduit 4 and the nozzle 211 of the first injection unit in the present embodiment constitutes a three-way connecting structure 5. A check valve 41 is provided at the position of the connecting conduit 4 near to the three-way connecting structure 5, so as to shut off or unilaterally open the flow passage from the second injection unit 22 to the nozzle 211 of the first injection unit. In this way, the melted material is prevented from backflowing along the intermediate flow passage in the case that only the first injection unit 21 is in operation.

The working principle of the injection molding machine according to the present embodiment will be described in the following.

When production needs a large amount of melted material, the first injection unit 21 and the second injection unit 22 will be used for injection. The piston rod 311 of the oil cylinder 31 is ejected to abuttingly engage the flow passage connecting block 32 with the nozzle 221 of the second injection unit, such that the flow passage in the second injection unit 22 and the flow passage in the nozzle 211 of the first injection unit 21 are communicated. Both the melted material from the second injection unit 22 and the first injection unit 21 enters the mold via the nozzle 211 of the first injection unit.

When production needs a small amount of melted materials, only the first injection unit 21 will be used for injection. In this case, the piston rod 311 of the oil cylinder 31 is retracted and reset, thus the pressure against the flow passage connecting block 32 vanishes. The first injection unit 21 can be deformed and elongated when heating, and the flow passage connecting block 32 is rigidly attached to the nozzle 211 of the first injection unit via the connecting conduit 4, therefore the flow passage connecting block 32 and the connecting conduit 4 will be pulled by the first injection unit 21. In this way, the flow passage connecting block 32 and the nozzle 221 of the second injection unit will be separated from each other automatically, such that the flow passage is disconnected to render only the first injection unit 21 being in operation. In addition, the above-mentioned structural design prevents the connecting conduit 4 from exposure to bending moment when only the first injection unit 21 is in operation. In this way, the safety of the connecting conduit 4 is guaranteed, that is, the intermediate flow passage is safe, the whole system of flow passages is prevented from deformation, leakage or damage, etc.

The injection molding machine according to the present invention is provided with a melted material communicating device, wherein the ejection of the piston rod of the oil cylinder can tightly engage the flow passage connecting block with the nozzle of the second injection unit, such that the melted material flow passage of the second injection unit (the secondary injection unit) and the first injection unit (the primary injection unit) is connected, that is, the melted material in the barrel of the first injection unit (the primary injection unit) enters the mold via the flow passage of the nozzle thereof, and the melted material in the barrel of the second injection unit (the secondary injection unit) enters the mold after entering the intermediate flow passage in the connecting conduit and the flow passage in the nozzle of the first injection unit via the melted material communicating device. In this way, the two injection units are in operation simultaneously to satisfy requirements of production with a large amount of melted material. The withdrawal of the piston rod of the oil cylinder may separate the flow passage connecting block from the nozzle of the second injection unit (the nozzle of the secondary injection unit) automatically. In this way, only the first injection unit (the primary injection unit) is in operation to satisfy requirements of production with a small amount of melted material. The present embodiment fulfills the requirements of interchange between production with a large amount of melted material and production with a small amount of melted material.

While the present invention has been described with respect to the above-mentioned typical embodiment, a person skilled in the art would appreciate that the terms are illustrative, not limiting in any sense. Accordingly, all changes and modifications that fall into the scope of the claims and the equivalents thereof are all covered by the following claims.

## Claims

1. A melted material communicating device of an injection molding machine used to connect or disconnect flow passages in a second injection unit (22) and a first injection unit (21), **characterized in that**, it comprises:
an oil cylinder (31), the cylinder body of which being fixedly attached to the second injection unit (22) and being spaced apart from the nozzle of the second injection unit (221) by an interval, the piston rod of the said oil cylinder (31) facing toward the nozzle of the second injection unit (221);
a flow passage connecting block (32) having a communicating cavity, the said flow passage connecting block (32) being located within the interval between the said oil cylinder (31) and the nozzle of the second injection unit (221), and the said flow passage connecting block (32) being capable of moving linearly within the interval; the said flow passage connecting block (32) being rigidly attached to the nozzle of the said first injection unit (211), and the communicating cavity of the said flow passage connecting block (32) being communicated with the flow passage of the nozzle of the first injection unit (211);
when the piston rod (311) of the said oil cylinder (31) is ejected, the said flow passage connecting block (32) can be driven to move in the direction of the nozzle of the said second injection unit (221), so as to abuttingly engage the said flow passage connecting block (32) with the outer end of the nozzle of the second injection unit (221) to communicate the communicating cavity of the said flow passage connecting block (32) with the flow passage of the nozzle of the said second injection unit (221), such that the flow passage in the second injection unit (22) is communicated with the flow passage in the first injection unit (21);
when the piston rod (311) of the said oil cylinder (31) is retracted and reset, the flow passage connecting block (32) is capable of disengaging from the outer end of the nozzle of the second injection unit (221), so as to disconnect the flow passage in the second injection unit (22) from the flow passage in the first injection unit (21).

2. The melted material communicating device according to claim 1, **characterized in that**, the said flow passage connecting block is provided with a sprue (34) at the end thereof facing toward the nozzle of the said second injection unit; the said sprue is contiguously engaged with the spherical surface of the nozzle of the said second injection unit.

3. The melted material communicating device according to claim 1, **characterized in that**, the cylinder body of the said oil cylinder is fixedly attached to the second injection unit via a connecting rod (33).

4. The melted material communicating device according to claim 3, **characterized in that**, the outer end of the second injection unit is provided with a nozzle flange (222) used to connect the nozzle of the said second injection unit, the said connecting rod is fixedly attached to the said second injection unit via the said nozzle flange.

5. The melted material communicating device according to claim 1, **characterized in that**, the said flow passage connecting block is rigidly attached to the nozzle of the first injection unit via a connecting conduit (4), the both ends of which are communicated with the communicating cavity of the said flow passage connecting block and the flow passage of the nozzle of the first injection unit, respectively.

6. The melted material communicating device according to claim 1, **characterized in that**, the flow passage connecting block is provided therebelow with a support seat to support the said flow passage connecting block, and the support seat is provided with a guiding rail, along which the said flow passage connecting block is capable of linearly moving within the interval between the said oil cylinder and the nozzle of the second injection unit.

7. An injection molding machine, **characterized in that**, it comprises a frame, an injection-shift holder provided on the frame, a plurality of injection units provided on the said injection-shift holder, and a melted material communicating device to connect or disconnected flow passages in any two injection units; wherein the melted material communicating device is the melted material communicating device according to any one of claims 1-6.

8. The injection molding machine according to claim 7, **characterized in that**, there are two injection units, that is, a first injection unit and a second injection unit, respectively; and the first injection unit is a primary injection unit and the second injection unit is a secondary injection unit.

## Patentansprüche

1. Kommunikationsvorrichtung für geschmolzenes Material einer Spritzgießmaschine zum Verbinden oder Trennen von Strömungskanälen in einer zweiten Einspritzeinheit (22) und einer ersten Einspritzeinheit (21),
**dadurch gekennzeichnet, dass**
sie umfasst:
einen Ölzylinder (31), dessen Zylinderkörper fest mit der zweiten Einspritzeinheit (22) verbunden ist und der in einem Abstand von der Düse der zweiten Einspritzeinheit (221) beabstandet ist, wobei die Kolbenstange des Ölzylinders (31) zur Düse der zweiten Einspritzeinheit (221) zeigt;
einen Strömungskanalverbindungsblock (32) mit einem Verbindungshohlraum, wobei der Strömungskanalverbindungsblock (32) innerhalb des Intervalls zwischen dem Ölzylinder (31) und der Düse der zweiten Einspritzeinheit (221) angeordnet ist, und der Strömungskanalverbindungsblock (32) in der Lage ist, sich innerhalb des Intervalls linear zu bewegen;
wobei der Strömungskanalverbindungsblock (32) starr an der Düse der ersten Einspritzeinheit (211) befestigt ist und der Verbindungshohlraum des Strömungskanalverbindungsblocks (32) mit dem Strömungskanal der Düse der ersten Einspritzeinheit (211) verbunden ist;
wenn die Kolbenstange (311) des Ölzylinders (31) ausgeworfen wird, kann der Strömungskanalverbindungsblock (32) angetrieben werden, um sich in Richtung der Düse der zweiten Einspritzeinheit (221) zu bewegen, um den Strömungskanalverbindungsblock (32) mit dem äußeren Ende der Düse der zweiten Einspritzeinheit (221) in Eingriff zu bringen, um den Verbindungshohlraum des Strömungskanalverbindungsblocks (32) mit dem Strömungskanal der Düse der zweiten Einspritzeinheit (221) zu verbinden, so dass der Strömungskanal in der zweiten Einspritzeinheit (22) mit dem Strömungskanal in der ersten Einspritzeinheit (21) verbunden ist;
wenn die Kolbenstange (311) des Ölzylinders (31) eingefahren und zurückgesetzt wird, ist der Strömungskanalverbindungsblock(32) in der Lage, sich vom äußeren Ende der Düse der zweiten Einspritzeinheit (221) zu lösen, um den Strömungskanal in der zweiten Einspritzeinheit (22) vom Strömungskanal in der ersten Einspritzeinheit (21) zu trennen.

2. Kommunikationsvorrichtung für geschmolzenes Material nach Anspruch 1,
**dadurch gekennzeichnet, dass**
der Strömungskanalverbindungsblock mit einem Anguss (34) an seinem Ende versehen ist, der in Richtung der Düse der zweiten Einspritzeinheit gerichtet ist; wobei der Anguss kontinuierlich mit der kugelförmigen Oberfläche der Düse der zweiten Einspritzeinheit verbunden ist.

3. Kommunikationsvorrichtung für geschmolzenes Material nach Anspruch 1,
**dadurch gekennzeichnet, dass**
der Zylinderkörper des Ölzylinders über eine Verbindungsstange (33) fest mit der zweiten Einspritzeinheit verbunden ist.

4. Kommunikationsvorrichtung für geschmolzenes Material nach Anspruch 3,
**dadurch gekennzeichnet, dass**
das äußere Ende der zweiten Einspritzeinheit mit einem Düsenflansch (222) versehen ist, der zum Verbinden der Düse der zweiten Einspritzeinheit verwendet wird, wobei die Verbindungsstange über den Düsenflansch fest mit der zweiten Einspritzeinheit verbunden ist.

5. Kommunikationsvorrichtung für geschmolzenes Material nach Anspruch 1,
**dadurch gekennzeichnet, dass**
der Strömungskanalverbindungsblock über eine Verbindungsleitung (4) starr an der Düse der ersten Einspritzeinheit befestigt ist, deren beide Enden mit dem Verbindungshohlraum des Strömungskanalverbindungsblock und dem Strömungskanal der Düse der ersten Einspritzeinheit verbunden sind.

6. Kommunikationsvorrichtung für geschmolzenes Material nach Anspruch 1,
**dadurch gekennzeichnet, dass**
der Strömungskanalverbindungsblock unten mit einem Stützsitz zum Tragen des Strömungskanalverbindungsblocks versehen ist, und der Stützsitz mit einer Führungsschiene versehen ist, entlang derer sich der Strömungskanalverbindungsblock innerhalb des Intervalls zwischen dem Ölzylinder und der Düse der zweiten Einspritzeinheit linear bewegen kann.

7. Eine Spritzgießmaschine,
**dadurch gekennzeichnet, dass**
diese einen Rahmen, einen auf dem Rahmen vorgesehenen Einspritzverschiebehalter, eine Vielzahl von Einspritzeinheiten, die auf dem Einspritzverschiebehalter vorgesehen sind, und eine Kommunikationsvorrichtung für geschmolzenes Material, um Strömungskanäle in beliebigen zwei Einspritzeinheiten zu verbinden oder zu trennen, umfasst; wobei die Kommunikationsvorrichtung für geschmolzenes Material die Kommunikationsvorrichtung für geschmolzenes Material nach einem der Ansprüche 1-6 ist.

8. Die Spritzgießmaschine nach Anspruch 7,
**dadurch gekennzeichnet, dass**
es zwei Einspritzeinheiten gibt, d.h. eine erste Einspritzeinheit und eine zweite Einspritzeinheit; und die erste Einspritzeinheit eine primäre Einspritzeinheit ist und die zweite Einspritzeinheit eine sekundäre Einspritzeinheit ist.

## Revendications

1. Dispositif de communication de matière fondue d'une machine de moulage par injection utilisé pour connecter ou déconnecter des canaux d'écoulement dans une seconde unité d'injection (22) et une première unité d'injection (21),
**caractérisé en ce**
**qu'**il comprend :
un cylindre à huile (31) dont le corps de cylindre est solidaire de la seconde unité d'injection (22) et espacé de la buse de la seconde unité d'injection (221) par un intervalle, la tige de piston dudit cylindre à huile (31) étant tournée vers la buse de la seconde unité d'injection (221) ;
un bloc de connexion de canal d'écoulement (32) ayant une cavité communicante, ledit bloc de connexion de canal d'écoulement (32) étant situé dans l'intervalle entre ledit cylindre à huile (31) et la buse de la seconde unité d'injection (221), et ledit bloc de connexion de canal d'écoulement (32) étant capable de se déplacer de façon linéaire dans l'intervalle ;
ledit bloc de connexion de canal d'écoulement (32) étant fixé rigidement à la buse de ladite première unité d'injection (211), et la cavité communicante dudit bloc de connexion de canal d'écoulement (32) étant communiquée avec le passage d'écoulement de la buse de la première unité d'injection (211) ;
lorsque la tige de piston (311) dudit cylindre à huile (31) est éjectée, ledit bloc de connexion de canal d'écoulement (32) peut être entraîné pour se déplacer dans la direction de la buse de ladite seconde unité d'injection (221), de manière à engager en butée ledit bloc de connexion de canal d'écoulement (32) avec l'extrémité extérieure de la buse de la seconde unité d'injection (221) pour communiquer la cavité communicante dudit bloc de connexion de canal d'écoulement (32) avec le canal d'écoulement de la buse de ladite seconde unité d'injection (221), de sorte que le canal d'écoulement dans la seconde unité d'injection (22) est communiqué avec le canal d'écoulement dans la première unité d'injection (21) ;
lorsque la tige de piston (311) dudit cylindre à huile (31) est rétractée et réenclenchée, bloc de connexion de canal d'écoulement (32) est capable de se dégager de l'extrémité extérieure de la buse de la seconde unité d'injection (221), de manière à déconnecter le canal d'écoulement dans la seconde unité d'injection (22) du passage de flux dans la première unité d'injection (21).

2. Le dispositif de communication de matière fondue selon la revendication 1,
**caractérisé en ce**
ledit bloc de connexion de canal d'écoulement est pourvu à son extrémité d'une carotte (34) tournée vers la buse de ladite seconde unité d'injection ; ladite carotte est en prise contiguë avec la surface sphérique de la buse de ladite seconde unité d'injection.

3. Le dispositif de communication de matière fondue selon la revendication 1,
**caractérisé en ce**
le corps de cylindre dudit cylindre à huile est fixé de manière fixe à la seconde unité d'injection par l'intermédiaire d'une bielle (33).

4. Le dispositif de communication de matière fondue selon la revendication 3,
**caractérisé en ce**
l'extrémité extérieure de la seconde unité d'injection est munie d'une bride de buse (222) servant à raccorder la buse de ladite seconde unité d'injection, ladite bielle est solidaire de ladite seconde unité d'injection par ladite bride de buse.

5. Le dispositif de communication de matière fondue selon la revendication 1,
**caractérisé en ce**
ledit bloc de connexion de canal d'écoulement est fixé rigidement à la buse de la première unité d'injection par l'intermédiaire d'un conduit de raccordement (4), dont les deux extrémités sont communiquées respectivement avec la cavité communicante dudit bloc de connexion de canal d'écoulement et le canal d'écoulement de la buse de la première unité d'injection.

6. Le dispositif de communication de matière fondue selon la revendication 1,
**caractérisé en ce**
le bloc de connexion de canal d'écoulement est muni ci-dessous d'un siège de support pour supporter ledit bloc de connexion de canal d'écoulement, et le siège de support est muni d'un rail guide, le long duquel ledit bloc de connexion de canal d'écoulement est capable de se déplacer linéairement dans l'intervalle entre ledit cylindre à huile et la buse de la seconde unité d'injection.

7. Une machine de moulage par injection,
**caractérisé en ce**
il comprend un cadre, un support de décalage d'injection prévu sur le cadre, une pluralité d'unités d'injection prévues sur ledit support de décalage d'injection, et un dispositif de communication de matériau fondu pour connecter ou déconnecter des canaux d'écoulement dans deux unités d'injection quelconques ; dans lequel le dispositif de communication de matière fondue est le dispositif de communication de matière fondue selon l'une des revendications 1-6.

8. La machine de moulage par injection selon la revendication 7,
**caractérisé en ce**
il y a deux unités d'injection, à savoir une première unité d'injection et une seconde unité d'injection, respectivement ; et la première unité d'injection est une unité d'injection primaire et la seconde unité d'injection est une unité d'injection secondaire.
